# DEMANDE DE BREVET EUROPEEN

(11) **EP 3 629 315 A1**
(43) Date de publication de la demande: **01.04.2020**
(21) Numéro de dépôt: 19199884.8
(22) Date de dépôt: 26.09.2019
(51) Int. Cl.: G08G 5/00, G06F 3/00

(54) **PROCÉDÉ DE PLANIFICATION DU VOL D'UN AÉRONEF PRODUIT PROGRAMME PRODUIT ORDINATEUR ET SYSTÈME DE PLANIFICATION ASSOCIÉS**

(30) Priorité: 26.09.2018 FR 1800996
(71) Demandeur: Thales, 92400 Courbevoie (FR)
(72) Inventeur: MENNECHET, Florent, 33700 MERIGNAC (FR); BOTA, Valéry, 33700 MERIGNAC (FR)
(74) Mandataire: Lavoix

(57) **Abrégé**

L'invention concerne un procédé de planification du vol d'un aéronef pilotable par un pilote (14) et comprenant un écran d'affichage tête basse (22) tactile définissant un plan d'affichage (P) et affichant des images représentant une surface tridimensionnelle (S) en perspective vue à travers le plan d'affichage et disposée par rapport à ce plan d'affichage selon un paramètre d'affichage (a).

Le procédé comprend les étapes suivantes :
- acquisition d'une information relative à un déplacement tactile sur l'écran d'affichage ;
- association de l'information relative au déplacement tactile à un premier ensemble de points (E1) situés dans le plan d'affichage ;
- projection du premier ensemble de points sur la surface tridimensionnelle (S) affichée afin d'obtenir un deuxième ensemble de points géographiques (E2) situés sur cette surface tridimensionnelle ; et
- affichage des images représentant le deuxième ensemble.

## Description

La présente invention concerne un procédé de planification du vol d'un aéronef pilotable par au moins un pilote et comprenant un écran d'affichage tête basse tactile.

La présente invention concerne également un produit programme ordinateur et un système de planification associés.

Il est connu de planifier le vol de l'aéronef en amont du décollage en définissant un plan de vol et de la trajectoire planifiée à suivre par l'aéronef. Toutefois, il est important que, lors du vol de l'aéronef, le pilote puisse adapter la trajectoire planifiée en fonction des différents éléments extérieurs tels d'autres aéronefs ou des obstacles géographiques.

Par ailleurs certains outils de planification du vol permettent d'annoter et de dessiner différentes figures sur une carte ce qui permet au pilote de pouvoir repérer des éléments d'intérêt plus facilement.

Cependant, ces annotations ne sont pas toujours très précises et ne permettent pas toujours d'être prises en compte sans corrections appropriées de la part du pilote. Il n'est alors pas aisé pour le pilote de prendre en compte ces éléments pour adapter au mieux sa trajectoire.

La présente invention a pour but de faciliter le repérage des éléments extérieurs à l'aéronef à considérer pour le pilote afin de faciliter la planification de la trajectoire de l'aéronef en cours de vol.

A cet effet, l'invention a pour objet un procédé de planification de vol dans un aéronef pilotable par au moins un pilote et comprenant un écran d'affichage tête basse tactile, l'écran d'affichage définissant un plan d'affichage et affichant des images représentant une surface tridimensionnelle en perspective vue à travers le plan d'affichage et disposée par rapport à ce plan d'affichage selon au moins un paramètre d'affichage ; le procédé de planification comprenant les étapes suivantes :
- acquisition d'une information relative à un déplacement tactile effectué par le pilote sur l'écran d'affichage tête basse ;
- association de l'information relative au déplacement tactile du pilote à un premier ensemble de points situés dans le plan d'affichage;
- projection du premier ensemble de points sur la surface tridimensionnelle affichée afin d'obtenir un deuxième ensemble de points géographiques situés sur cette surface tridimensionnelle ; et
- affichage des images représentant le deuxième ensemble de points.

Suivant d'autres aspects avantageux de l'invention, le procédé de planification comprend une ou plusieurs des caractéristiques suivantes, prise(s) isolément ou suivant toutes les combinaisons techniquement possibles :
- la surface tridimensionnelle correspond au relief du terrain survolé par l'aéronef ;
- la projection du premier ensemble de points sur la surface tridimensionnelle s'effectue selon une direction de projection orthogonale au plan d'affichage ;
- le procédé de planification comprend en outre une étape d'émission du deuxième ensemble de points à un système distant de l'aéronef ;
- le procédé de planification comprend en outre une étape de réception d'au moins un troisième ensemble de points géographiques d'un système distant de l'aéronef et une étape d'affichage du troisième ensemble de points sur l'écran d'affichage tête basse ;
- l'information acquise lors du déplacement tactile du pilote le long d'une ligne fermée est la surface intérieure définie par la ligne fermée ;
- le procédé de planification comprend une étape de validation ou d'annulation de l'affichage à partir d'informations fournies par le pilote ; et
- le procédé de planification comprend une étape de stockage dans une mémoire externe à l'aéronef du deuxième ensemble de points.

L'invention a également pour objet un produit programme d'ordinateur comportant des instructions logicielles qui, lorsque mises en oeuvre par un équipement informatique, mettent en œuvre un procédé de planification tel que défini ci-dessus.

L'invention a également pour objet un système de planification configuré pour être embarqué dans un aéronef pilotable par au moins un pilote et comprenant un écran d'affichage tête basse tactile, l'écran d'affichage tête basse définissant un plan d'affichage et affichant des images représentant une surface tridimensionnelle en perspective vue à travers le plan d'affichage et disposée par rapport à ce plan d'affichage selon au moins un paramètre d'affichage ; le système de planification comprenant :
- un module d'acquisition configuré pour acquérir un déplacement tactile effectué par le pilote sur l'écran d'affichage tête basse ;
- un module de traitement configuré pour associer l'information relative au déplacement tactile du pilote à un premier ensemble de points, le premier ensemble de points étant situé dans le plan d'affichage ;
- un module de projection configuré pour projeter le premier ensemble de points sur la surface tridimensionnelle affichée afin d'obtenir un deuxième ensemble de points géographiques situés sur cette surface tridimensionnelle ; et
- un module de sortie configuré pour afficher une image représentant le deuxième ensemble de points.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un système de planification embarqué dans un aéronef, selon l'invention;
- la figure 2 est une vue de côté schématique d'un cockpit de l'aéronef de la figure 1 ;
- la figure 3 est un organigramme d'un procédé de planification selon l'invention, le procédé étant mis en œuvre par le système d'affichage de la figure 1 ; et
- les figures 4 et 5 sont des vues schématiques expliquant la mise en oeuvre de certaines étapes du procédé de la figure 3.

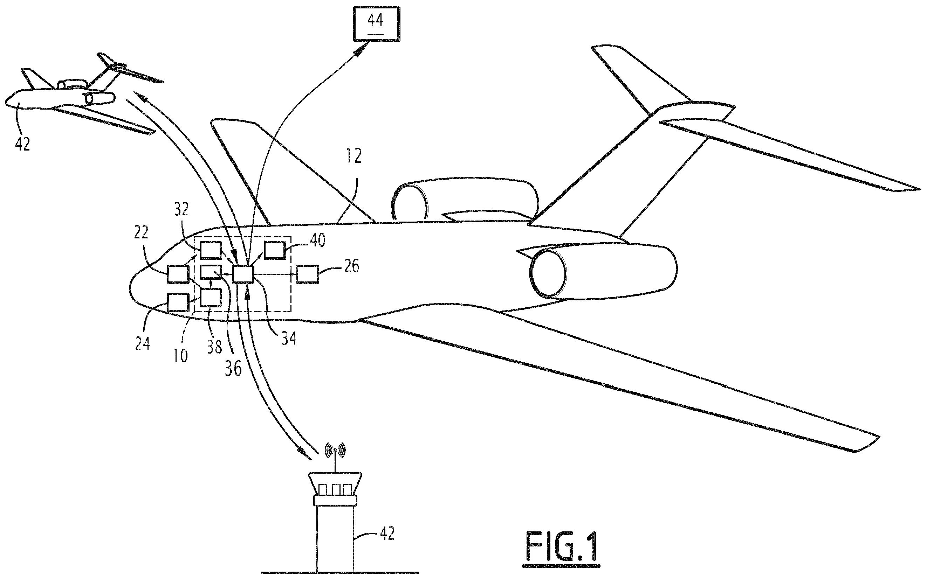

Un système de planification 10 est représenté sur la figure 1. Ce système 10 est embarqué dans un aéronef 12.

On comprend ici par aéronef 12, tout avion ou hélicoptère ou tout autre engin volant pilotable par un pilote 14 à partir de cet engin.

Selon un autre exemple de réalisation, l'aéronef 12 est un drone pilotable à distance. Dans ce cas, le système de planification 10 est disposé dans un centre de contrôle, par exemple terrestre, à partir duquel le pilotage du drone est effectué.

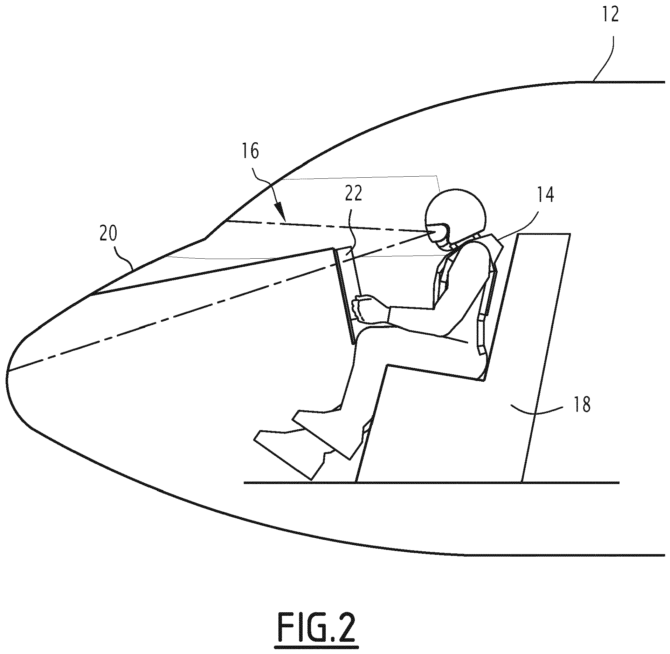

Comme visible sur la figure 2, l'aéronef 12 comprend un cockpit 16.

Le cockpit 16 comporte au moins un siège 18 du pilote 14 et un pare-brise 20 au moins partiellement transparent et séparant l'intérieur du cockpit 16 de l'environnement extérieur de l'aéronef 12.

Le cockpit 16 comprend en outre un écran d'affichage tête basse 22.

Dans un mode de réalisation avantageux, l'aéronef 12 comprend en outre un système de gestion de vol 26.

Comme visible sur la figure 2, l'écran d'affichage tête basse 22 est disposé dans le cockpit 16 en regard du pilote 14.

L'écran d'affichage tête basse 22 définit un plan d'affichage P correspondant par exemple à sa surface.

L'écran d'affichage tête basse 22 est configuré pour afficher des informations dans l'aéronef 12.

L'écran d'affichage tête basse 22 est en outre tactile. Il est configuré pour détecter chaque déplacement tactile effectué par le pilote 14 sur l'écran d'affichage tête basse 22.

Le système de gestion de vol 26 (ou *Flight Managment System* en anglais) est un calculateur embarqué dans l'aéronef 12 disposant d'un logiciel configuré pour assister le pilote 14 pendant le vol de l'aéronef 12 en fournissant par exemple des renseignements sur le pilotage, la navigation, la consommation de carburant, etc.

Le système de planification 10 comprend un module d'acquisition 32, un module de traitement 34, un module de projection 36, un module de sortie 38 et une mémoire interne 40.

Chaque module 32, 34, 36, 38 du système de planification 10 se présente par exemple sous la forme d'un logiciel mis en œuvre par un calculateur adapté et/ou au moins partiellement d'un circuit logique programmable, par exemple de type FPGA (de l'anglais *Field Programmable Gate Array*).

Le module d'acquisition 32 est configuré pour acquérir des informations relatives à chaque déplacement tactile effectué par le pilote 14 sur l'écran d'affichage tête basse 22.

Le module d'acquisition 32 est configuré pour envoyer la forme acquise au module de traitement 34.

Le module de traitement 34 est configuré pour traiter les données associées à la forme acquise par le module d'acquisition 32.

Le module de traitement 34 est en outre configuré pour communiquer avec le module de projection 36, le module de sortie 38 et le système de gestion de vol 26.

Le module de traitement 34 est en outre avantageusement configuré pour communiquer avec au moins un système distant 42 de l'aéronef 12. L'élément distant 42 est par exemple un aéronef environnant ou un tour de contrôle, comme visible sur la figure 1.

En outre, le module de traitement 34 est avantageusement configuré pour stocker des données dans la mémoire interne 40 de l'aéronef 12.

Avantageusement, le module de traitement 34 est en outre configuré pour envoyer des données vers une mémoire externe 44 à l'aéronef 12 afin de les stocker. La mémoire externe 44 est par exemple un serveur informatique.

Le module de projection 36 est configuré pour recevoir des données du module de traitement 34, pour les traiter et pour envoyer le résultat du traitement au module de traitement 34 et au module de sortie 38.

Le module de sortie 38 est configuré pour afficher une image sur l'écran d'affichage tête basse 22 à partir des données envoyées par le module de projection 36.

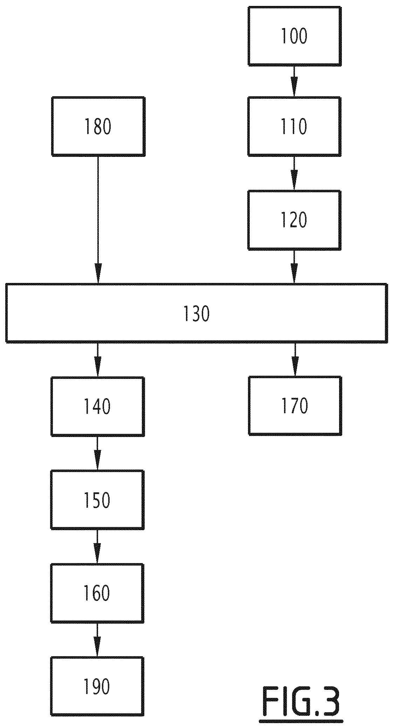

Un procédé d'affichage de planification du vol d'un aéronef 12 selon l'invention va maintenant être décrit en référence à la figure 3 présentant un organigramme de ses étapes.

Ce procédé est mis en œuvre par le système de planification 10.

Initialement, le pilote 14 est installé dans le cockpit 16.

Lors de l'étape initiale 100, l'écran d'affichage tête basse 22 affiche des images.

En particulier, l'écran d'affichage 22 affiche des images représentant une surface tridimensionnelle S en perspective vue à travers le plan d'affichage P et disposée par rapport à ce plan d'affichage P selon au moins un paramètre d'affichage.

La surface tridimensionnelle S comprend un axe de référence A-A'. L'axe de référence A-A' s'étend sensiblement selon la normal de la surface tridimensionnelle S en un point de référence B.

Dans un tel cas, le paramètre d'affichage est par exemple l'angle α défini entre l'axe de référence A-A' et le plan d'affichage P.

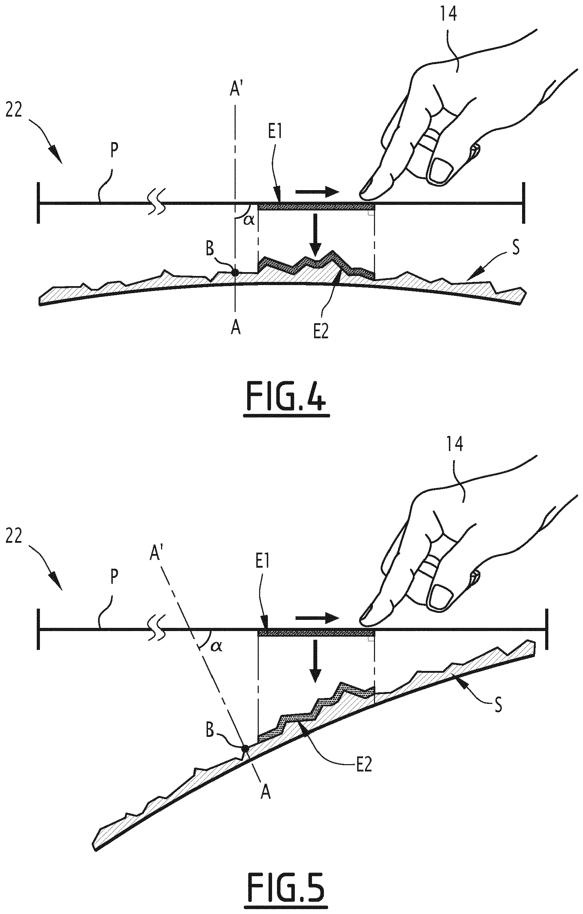

Ainsi, comme visible sur les figures 4 et 5, le paramètre d'affichage permet de changer la perspective perçue par le pilote 14 observant la surface tridimensionnelle S à travers l'écran d'affichage 22.

La surface tridimensionnelle S correspond par exemple au relief du terrain survolé par l'aéronef 12.

Le relief est constitué d'un ensemble de points géographiques, chaque point géographique étant associé à un emplacement géographique précis de l'environnement de l'aéronef 12. Chaque point géographique est défini par ses trois coordonnées géographiques, par exemple, par sa latitude, sa longitude et son altitude.

L'affichage du relief dans les trois dimensions de l'espace permet une meilleure perception de l'environnement de l'aéronef 12 par le pilote 14.

Le procédé est mis en œuvre lorsque le pilote 14 déplace au moins un doigt sur l'écran d'affichage tête basse 22 tactile.

Ainsi, lors de l'étape 110, le module d'acquisition 32 acquiert une information relative au déplacement tactile du pilote 14 sur l'écran d'affichage tête basse 22.

En particulier, le module d'acquisition 32 acquiert une forme géométrique associée au déplacement tactile.

Le module d'acquisition 32 détecte en outre si le déplacement tactile du pilote 14 s'effectue le long d'une ligne ouverte ou d'une ligne fermée.

Le module d'acquisition 32 envoie alors l'information associée au déplacement tactile au module de traitement 34.

Lors de l'étape 120 suivante, le module de traitement 34 associe l'information relative au déplacement tactile du pilote 14 à un premier ensemble de points E1 situés dans le plan d'affichage P.

En particulier, lors du déplacement tactile du pilote 14 le long d'une ligne ouverte, le premier ensemble de points E1 est alors une ligne.

Lors du déplacement tactile du pilote 14 le long d'une ligne fermée, le premier ensemble de points E1 est alors une zone bidimensionnelle.

Le module de traitement 34 envoie la position du premier ensemble de points E1 au module de projection 36.

Puis, lors de l'étape 130 suivante, le module de projection 36 projette le premier ensemble de points E1 sur la surface tridimensionnelle S affichée afin d'obtenir un deuxième ensemble de points géographiques E2 situés sur cette surface tridimensionnelle S.

Comme visible sur les figures 4 et 5, la projection du premier ensemble de points E1 sur l'environnement s'effectue avantageusement selon une direction de projection orthogonale au plan d'affichage P.

Le module de projection 36 envoie la position du deuxième ensemble de points E2 au module de sortie 38 et avantageusement au module de traitement 36.

Lors de l'étape 140 suivante, le module de sortie 38 affiche des images représentant le deuxième ensemble de points E2 sur l'écran d'affichage tête basse 22.

Puis, le procédé de planification comprend une étape optionnelle 150 de validation ou d'annulation de l'affichage sur l'écran 22 des ensembles de points géographiques E2, E3. La validation ou l'annulation est réalisée par le module de traitement 34 à partir d'informations fournies par le pilote 14. Par exemple, le pilote 14 appuie sur un bouton affiché sur l'écran 22, le module d'acquisition 32 détectant le contact du doigt du pilote 14 avec l'écran et envoyant l'information associée au module de traitement. En variante, le pilote 14 émet une commande vocale reçue par le module de traitement 34.

Suite à la validation par le module de traitement 34 lors de l'étape 160, l'ensemble de points E2, E3 est stocké dans la mémoire interne 40 de l'aéronef 12 lors de l'étape 150.

Avantageusement, l'ensemble de points E2, E3 est envoyé à l'extérieur de l'aéronef 12 et stocké dans la mémoire externe 44 à l'aéronef 12.

Suite à l'étape 130, le procédé de planification comprend avantageusement une étape 170 d'émission de l'ensemble de points E2, E3 à l'au moins un système distant 42 de l'aéronef 12.

En parallèle des étapes 100 à 130, le procédé de planification comprend avantageusement une étape 180 de réception d'au moins un troisième ensemble de points géographiques E3 de l'extérieur de l'aéronef 12. Le troisième ensemble de points géographiques E3 est envoyé par l'au moins un système distant 42 éventuellement différent de celui de l'étape 170.

Le troisième ensemble de points E3 est avantageusement une ligne ou une zone tridimensionnelle situées sur la surface tridimensionnelle S.

Puis, le troisième ensemble de points E3 est affiché sur l'écran d'affichage tête basse 22 pendant l'étape 140.

Suite à l'étape 160, lors d'une étape optionnelle 190, l'ensemble de points E2, E3 est envoyé au système de gestion de vol 26.

Le système de gestion de vol 26 construit alors une trajectoire de l'aéronef 12 à partir du deuxième ensemble de points géographiques E2 associés au déplacement tactile du pilote 14 le long d'une ligne ouverte et avantageusement à partir de l'au moins un troisième ensemble de points géographiques E3 reçu de l'élément distant 42.

Le système de gestion de vol 26 prend en compte dans le calcul de la trajectoire la zone géographique d'intérêt à partir du deuxième ensemble de points géographiques E2 associés au déplacement tactile du pilote 14 le long d'une ligne fermée et avantageusement à partir de l'au moins un troisième ensemble de points géographiques E3 reçu de l'élément distant 42.

On conçoit alors que la présente invention présente un certain nombre d'avantages.

Tout d'abord, le procédé de planification de vol selon l'invention permet de faciliter le repérage des éléments d'intérêt extérieurs à l'aéronef 12.

En effet, la définition tactile des trajectoires et des zones d'intérêt sur l'écran d'affichage tête basse 22 est très intuitive pour le pilote 14.

De plus, la représentation du relief en trois dimensions permet au pilote de mieux appréhender l'environnement de l'aéronef 12.

Ainsi l'invention permet également de faciliter la planification de la trajectoire de l'aéronef 12 en cours de vol.

L'invention permet en outre une communication améliorée entre le pilote 14 et les éléments distants 42 extérieurs à l'aéronef 12 tels les aéronefs environnants ou une tour de contrôle.

Le partage des ensembles de points tridimensionnels E2, E3 ne nécessite pas l'utilisation de la parole et permet ainsi une communication et une compréhension plus aisées. En effet, la reconnaissance des formes est universelle et ne dépend pas de la langue, de la culture ou de l'âge du pilote 14.

Ainsi, il est aisé grâce à l'invention d'établir rapidement des stratégies ou des modifications de trajectoires en collaboration avec les éléments distants 42. L'invention permet donc d'importants gains de temps et une meilleure réactivité du pilote 14 en cas de situation imprévue.

Enfin, le stockage des points géographiques E2, E3 dans la mémoire interne 40 et dans la mémoire externe 44 permet d'obtenir un historique des points géographiques E2, E3 et un partage avec les différents éléments distants 42 au cours du temps afin de faciliter l'élaboration des vols futurs de l'aéronef 12.

## Revendications

1. Procédé de planification du vol d'un aéronef (12) pilotable par au moins un pilote (14) et comprenant un écran d'affichage tête basse (22) tactile, l'écran d'affichage (22) définissant un plan d'affichage (P) et affichant des images représentant une surface tridimensionnelle (S) en perspective vue à travers le plan d'affichage (P) et disposée par rapport à ce plan d'affichage (P) selon au moins un paramètre d'affichage (α) ;
le procédé de planification comprenant les étapes suivantes :
- acquisition d'une information relative à un déplacement tactile effectué par le pilote (14) sur l'écran d'affichage tête basse (22) ;
- association de l'information relative au déplacement tactile du pilote (14) à un premier ensemble de points (E1) situés dans le plan d'affichage (P);
- projection du premier ensemble de points (E1) sur la surface tridimensionnelle (S) affichée afin d'obtenir un deuxième ensemble de points géographiques (E2) situés sur cette surface tridimensionnelle (S) ; et
- affichage des images représentant le deuxième ensemble de points (E2).

2. Procédé de planification selon la revendication 1, dans lequel la surface tridimensionnelle (S) correspond au relief du terrain survolé par l'aéronef (12).

3. Procédé de planification selon la revendication 1 ou 2, dans lequel la projection du premier ensemble de points (E1) sur la surface tridimensionnelle (S) s'effectue selon une direction de projection orthogonale au plan d'affichage (P).

4. Procédé de planification selon l'une quelconque des revendications précédentes, comprenant en outre une étape d'émission du deuxième ensemble de points (E2) à un système distant (42) de l'aéronef (12).

5. Procédé de planification selon l'une quelconque des revendications précédentes, comprenant en outre une étape de réception d'au moins un troisième ensemble de points géographiques (E3) d'un système distant (42) de l'aéronef (12) et une étape d'affichage du troisième ensemble de points (E3) sur l'écran d'affichage tête basse (22).

6. Procédé de planification selon l'une quelconque des revendications précédentes, dans lequel l'information acquise lors du déplacement tactile du pilote (14) le long d'une ligne fermée est la surface intérieure définie par la ligne fermée.

7. Procédé de planification selon l'une quelconque des revendications précédentes, comprenant une étape de validation ou d'annulation de l'affichage à partir d'informations fournies par le pilote (14).

8. Procédé de planification selon l'une quelconque des revendications précédentes, comprenant une étape de stockage dans une mémoire externe (44) à l'aéronef (12) du deuxième ensemble de points (E2).

9. Produit programme d'ordinateur comportant les instructions logicielles qui, lorsque mises en œuvre par un équipement informatique, mettent en œuvre le procédé de planification selon l'une quelconque des revendications précédentes.

10. Système de planification (10) configuré pour être embarqué dans un aéronef (12) pilotable par au moins un pilote (14) et comprenant un écran d'affichage tête basse (22) tactile, l'écran d'affichage tête basse (22) définissant un plan d'affichage (P) et affichant des images représentant une surface tridimensionnelle (S) en perspective vue à travers le plan d'affichage (P) et disposée par rapport à ce plan d'affichage (P) selon au moins un paramètre d'affichage (a) ;
le système de planification (10) comprenant :
- un module d'acquisition (32) configuré pour acquérir un déplacement tactile effectué par le pilote (14) sur l'écran d'affichage tête basse (22) ;
- un module de traitement (34) configuré pour associer l'information relative au déplacement tactile du pilote (14) à un premier ensemble de points (E1), le premier ensemble de points (E1) étant situé dans le plan d'affichage (P) ;
- un module de projection (36) configuré pour projeter le premier ensemble de points (E1) sur la surface tridimensionnelle (S) affichée afin d'obtenir un deuxième ensemble de points géographiques (E2) situés sur cette surface tridimensionnelle (S) ; et
- un module de sortie (38) configuré pour afficher une image représentant le deuxième ensemble de points (E2).
